# EUROPEAN PATENT SPECIFICATION

(11) **EP 3 232 870 B1**
(45) Date of publication and mention of the grant of the patent: **22.08.2018**
(21) Application number: 15807857.6
(22) Date of filing: 08.12.2015
(51) Int. Cl.: A47J 31/40

(54) **BEVERAGE DISPENSER**
GETRÄNKESPENDER
DISTRIBUTEUR DE BOISSONS

(30) Priority: 16.12.2014 EP 14198179
(43) Date of publication of application: 25.10.2017
(73) Proprietor: Nestec S.A., 1800 Vevey (CH)
(72) Inventor: DUBIEF, Flavien, 1424 Champagne (CH)
(74) Representative: Ducreux, Marie
(86) International application number: PCT/EP2015/078943
(87) International publication number: WO 2016/096530

(56) References cited:
- WO-A1-2008/071613
- WO-A1-2014/116976
- US-B1- 6 182 555

## Description

### Field of the invention

The present invention relates to beverage dispensers preparing beverages from a soluble powder or a concentrate stored in a container and in which a dose of powder or concentrate is dispensed from the container into a dissolution chamber to be mixed with a diluent.

### Background of the invention

Many beverages like espresso and other coffee beverages, milk beverages, chocolate beverages are prepared by mixing a food soluble powder or a concentrate with a diluent. Mixing devices are known for speedier preparation of such beverages by mixing the soluble beverage component with the diluent, such as water. These devices typically comprise a dissolution chamber in which the soluble component and the diluent are fed. The diluent can be introduced into the dissolution chamber in order to create a whirlpool to efficiently dissolve the soluble component in the water or the diluent can be introduced under the form of jets that provides mixing, dissolving and frothing. The mixture can also eventually be frothed by a whipper in the dissolution chamber to reconstitute the beverage and produce foam. The beverage is then usually evacuated into a receptacle for drinking.

The beverage soluble powder or concentrate is usually stored in a container placed above the dissolution chamber opened mouth and a dosing device doses and delivers the beverage soluble powder which falls in the dissolution chamber. Liquid is simultaneously fed to the dissolution chamber so that dissolution occurs.

In the field of production of beverages there is a general feeling that beverage reconstituted from soluble powders or concentrates are of lower quality than beverages fleshly brewed from raw ingredients like tea leaves or roast and ground coffee. This feeling is not objective since powders and concentrates have been obtained by brewing and extraction of said tea leaves and roast and ground coffee.

Actually this feeling is partly due to the preparation of the beverages by reconstitution with water which appears very basic and common compared to the optimised brewing of tea leaves in a tea pot or the high pressure extraction of coffee in an extraction chamber. For example, for tea brewing it is possible to create a sort of spectacle around a transparent tea brewing chamber made visible for customer, as described in US 6182555, WO 2014116976 or WO 2014146952. On the contrary the reconstitution of beverages from powders is rarely made apparent. For example, in the above cited document US 6182555, contrary to the transparent tea brewing chamber, the mixing assemblies dedicated to reconstituted beverages remains hidden behind the front door of the dispenser.

Reconstitution of beverages from powders is usually made by contacting soluble beverage powder with water and mixing them with a whipper. Such a preparation does not present much interest and showing that preparation to the customers does not improve the feeling that the beverage can be of high quality.

An object of the present invention is to provide a beverage dispenser preparing reconstituted beverages by dissolution of powders or concentrates in water and wherein the reconstitution can be made attractive for the customer.

### Summary of the invention

According to a first aspect, the invention provides a process for preparing a beverage by dissolution of soluble beverage powder or beverage concentrate with a diluent, the process being implemented in a beverage dispenser,
said beverage dispenser comprising :
- at least one mixing chamber for mixing a dose of soluble beverage powder or of beverage concentrate with diluent, said mixing chamber being at least partially transparent,
and the process comprising the steps of :
- introducing a dose of soluble beverage powder or beverage concentrate in the mixing chamber,
- mixing the dosed soluble beverage powder or beverage concentrate with diluent in the mixing chamber,
- dispensing the beverage from the mixing chamber,
- rinsing the mixing chamber,
wherein, in said process, the content of the mixing chamber is visible from outside of the dispenser during the step of mixing only.

The beverage preparation process of the present invention is configured for preparing a beverage from water soluble beverage powder or water soluble beverage concentrate and a diluent by mixing a dose of said powder or said concentrate with a diluent, preferably water. During mixing the powder or the concentrate dissolves in diluent, preferably water, and the mixture produces the beverage. The terms "dissolution" and "dissolve" encompass the terms "dilution" and "dilute" in case of concentrates, which refer to liquid concentrates in the present invention.

The soluble beverage powder used in the process of the present invention completely dissolves during the beverage preparation contrary to infusable beverage ingredients like a roast and ground coffee powder or tea leaves in which only a part of the ingredients are extracted in water. The soluble beverage powder is preferably selected in the list of instant coffee, milk powder, chocolate powder.
The soluble beverage concentrate is preferably selected in the list of coffee concentrate, milk concentrate, chocolate concentrate.

The process is implemented in a beverage dispenser comprising a mixing chamber for preparing a beverage from the water soluble beverage powder or concentrate and diluent. Generally this mixing chamber comprises an opening for introducing the soluble powder or the concentrate, at least one diluent inlet and a beverage outlet. The mixing chamber is usually designed so as to make an efficient contact of the soluble powder or the concentrate with the diluent and to enable the dissolution of the powder or concentrate to produce the beverage.

Preferably the mixing chamber is a whipperless chamber. Consequently the chamber does not comprise any rotating whipper activated by a motor. Preferably, the chamber comprises an opening for introducing the soluble powder or the concentrate and at least one diluent inlet configured for introducing the diluent in the form of a jet inside the chamber and the chamber is configured so that a whirlpool of liquid is created in the chamber and the jet of diluent entering the chamber hits said whirlpool as long as diluent is introduced in the chamber. A dissolution chamber working according to this principle is described for example in WO 2008/071613.

The process is implemented in a beverage dispenser, said dispenser comprising a container for storing water soluble beverage powder or concentrate.
For a powder, such a container usually comprises a tank and a powder outlet. Usually the powder outlet is positioned at the bottom of the tank. Generally the dispenser comprises a dosing device for dosing the water soluble beverage powder and delivering the dosed powder to the mixing chamber. The dosing device is preferably a rotatable volumetric dosing member. The dosing device can be comprised in the list of a dosing screw, a dosing auger or perforated discs. Depending on the type of container for storing the soluble beverage powder, the dosing device can be integrated inside said container or provided at the outlet of said container. According to the preferred embodiment the dosing device is placed inside the container and positioned at the bottom of the container. It is preferably a dosing screw. Such a screw displaces a volume of powder from the container to the powder outlet. This sub-assembly composed of the container and the dosing device is usually identified as a canister in current beverage dispensers.
For a concentrate, the container can be a bag-in-box or a bottle.
Usually the mixing chamber is positioned under the outlet of the container so that the powder or the concentrate can be delivered in the chamber by gravity fall.

Generally the top of the mixing chamber is opened so that powder or concentrate can freely flow inside. By opened it is meant that the top of the chamber is not covered e.g. by a lid.

The diluent inlet of the mixing chamber is connected to a diluent fluid system. The diluent fluid system aims to deliver the diluent at the temperature, the flow and/or the velocity needed for the preparation of the beverage.

The dispenser usually comprises a chute for guiding the water soluble beverage powder falling from the powder outlet of the container to the dissolution chamber. Generally the chute presents a conical shape tapering from the top to the bottom of the chute.

Apart from the beverage mixing chamber, the beverage dispenser generally comprises :
- a housing,
- the diluent fluid system for delivering a diluent to the at least one diluent inlet of the dissolution chamber,
- a dispensing area,
- a user interface.

The user interface enables the ordering of beverage.
The fluid system for delivering a diluent to the at least one diluent inlet of the mixing chamber can comprise a heating device and/or a cooling device, a pump and generally valves to enable the dispensing of the diluent in the dissolution chamber. The fluid system can comprise a diluent tank or can be connected to tap water supply. The diluent is preferably water.
The dispensing area enables the positioning of a drinking cup to receive the beverage produced in the mixing chamber.

The process for preparing a beverage in the dispenser comprises the following steps of :
- introducing a dose of soluble beverage powder or beverage concentrate in the mixing chamber,
- mixing the dosed soluble beverage powder or beverage concentrate with diluent in the mixing chamber,
- dispensing the beverage from the mixing chamber,
- rinsing the mixing chamber.

These steps can be implemented successively or can partially overlap. For example, mixing and dispensing can occur partially simultaneously, as well as dispensing and rinsing.
According to the invention the mixing chamber is at least partially transparent. The chamber can be made of transparent material such a transparent plastic or glass. The whole mixing chamber can be transparent or at least a part of the chamber can be transparent. Preferably at least the middle part of the mixing chamber is transparent. In the present invention, middle part of the mixing chamber designates the part between the top and the bottom of the mixing chamber. Even more preferably only the middle part of the mixing chamber is transparent. In that last embodiment the top and the bottom of the mixing chamber are not transparent. Consequently the way the soluble beverage powder or beverage concentrate is introduced in the chamber and the way the beverage is evacuated from the chamber is not visible.

Due to the transparency of the chamber, it is possible to view the content of the chamber. Yet, according to the invention, during the process of preparation of the beverage, the content of the mixing chamber is made visible from the outside of the dispenser during the step of mixing only. Consequently in the process of preparation of the beverage, the content of the mixing chamber is not visible from the outside of the dispenser during the steps of dosing and rinsing.

According to the preferred embodiment, the dispenser comprises a lighting device and in the process for preparing a beverage, the content of the mixing chamber is made visible from the outside of the dispenser by switching on the lighting device during the step of mixing only. Switching on the lighting device during the step of mixing draws the attention of the customer on the mixing chamber and on the aspect of its content during the step of mixing of the beverage. During this step the beverage preparation presents the aspect of a whirlpool, the beverage preparation is homogeneous, optionally with a layer of bubbles at the top of the beverage, and very similar to the beverage expected by the customer except that it is in movement. While watching this step of the preparation, the a priori feeling of the customer about beverage prepared from powders or concentrates can be reversed.

The lighting device can be any kind of device producing a light, preferably a white light. It can be a lamp, preferably a light-emitting diode (LED).

Preferably the lighting device is positioned in an area of the dispenser that is on one lateral side of the mixing chamber or between the front of the dispenser and the mixing chamber. The lighting device is preferably not placed at the back of the mixing chamber. Indeed when beverage preparations are opaque and not transparent - like coffee, milk, chocolate - illuminating the mixing chamber from the back does not enable the customer to see the content of the mixing chamber optimally.
The present process is preferably implemented for the preparation of milk, coffee, chocolate or combination of these beverages.

The process of the present invention can be implemented in a dispenser, which comprises several mixing chambers, and in which one lighting device is dedicated to each mixing chamber. In this embodiment each lighting device is configured for illuminating the content of one mixing chamber only when said lighting device is switched on. This effect can be obtained by optimally placing the lighting device next to its dedicated mixing chamber, by orienting the lighting device to its dedicated chamber and/or by adding physical barriers to prevent the lighting device to illuminate other mixing chambers than the one it is dedicated to.

The process of the present invention can be implemented in a dispenser, which comprises a front panel encasing the internal elements of the dispenser, said front panel comprising at least one area through which the middle of the mixing chamber is visible from the outside of the dispenser.
The front panel is usually used to protect and/or hide the internal elements of the dispenser and provide the dispenser with a nicer aspect. Preferably the front panel hides internal elements like beverage product containers, the tops and bottoms of the mixing chambers, the dispensing outlets of the mixing chambers. The front panel can be an openable front door of the dispenser providing access to the internal elements of the dispenser. The external face of the front panel can support a user interface.
Preferably the front panel comprises an area though which only the middle of the mixing chamber is visible. Consequently the top and the bottom of the chamber are not visible.
The opening can present any shape.
The area can be an opening in the front door or a transparent area of the front door, like a window.
If the dispenser comprises several mixing chambers, the front panel can present several areas each dedicated to one mixing chamber or only one area for all the mixing chambers.

According to one first embodiment of the process of the invention,
- the mixing chamber is always visible from the outside of the dispenser,
- the dispenser comprises a lighting device, and
- the content of the mixing chamber is made visible by switching on the lighting device during the step of mixing only.

According to this first embodiment, the customer is always able to see the mixing chamber from the outside of the dispenser, preferably the middle of the mixing chamber only. Yet in absence of illumination, the content itself of the mixing chamber is not clearly visible. When the lighting device is switched on the content of the mixing chamber becomes visible.
This first embodiment can be implemented by positioning the mixing chamber behind a front door, said front door presenting an area making the mixing chamber visible from outside. In absence of illumination by the lighting device, the mixing chamber is visible but the content of the mixing chamber is not visible positioned, for example due to the shadow of the front door on the chamber. The area in the front door can be an opening in the front door or a transparent window for hygienic and security reasons.

According to a second embodiment of the process of the invention,
- the mixing chamber is positioned behind a front panel,
- at least the part of the front panel positioned in front of the middle of the mixing chamber is transparent during the step of mixing only.

The part of the front panel positioned in front of the mixing chamber - preferably in the front of the middle of the mixing chamber - can be a one-way mirror. The dispenser can comprise at least one lighting device for illuminating the at least one mixing chamber and the one-way mirror, the lighting device being switched on during the step of mixing only.
The part of the front panel positioned in front of the mixing chamber - preferably in the front of the middle of the mixing chamber - can be a polarised glass facing the middle of the mixing chamber.
Front panels comprising one-way mirror or polarised glass parts present the advantage of being easy cleanable.

According to a second aspect the invention provides a beverage dispenser comprising :
- at least one beverage powder or beverage concentrate container,
- at least one whipperless mixing chamber for mixing a dose of soluble beverage powder or of beverage concentrate with diluent,
wherein
- said mixing chamber is at least partially transparent, and
- said mixing chamber comprises at least one diluent inlet configured for introducing the diluent in the form of a jet inside the chamber and the chamber is configured so that a whirlpool of liquid is created in the chamber and the jet of diluent entering the chamber hits said whirlpool as long as diluent is introduced in the chamber,
- the dispenser comprising at least one lighting device for illuminating the content of at least one mixing chamber, and
- the dispenser is configured for making the content of said chamber visible from the outside of the dispenser only temporarily.

Preferably the at least one mixing chamber is a chamber having a transverse bottom wall and a longitudinal upward wall, at least one diluent inlet and at least one beverage outlet located in the bottom wall,
- the diluent inlet being provided through a lower portion of the upward wall and being dimensioned and oriented for providing a jet of diluent in the chamber oriented along a direction inside the chamber which is offset relative to the longitudinal axis of the chamber, and which is inclined downwardly in direction toward the bottom wall at an angle relative to the transversal plane of the chamber,
- the liquid delivery outlet being configured for enabling liquid to rise up along the side of the upward wall further to the jet of diluent entering the chamber.

Preferably said mixing chamber comprises a valve configured for selectively closing the liquid delivery outlet. This valve can be a pinch valve selectively opened and closed to control the content of liquid within the chamber and the dispensing of the beverage from the chamber.

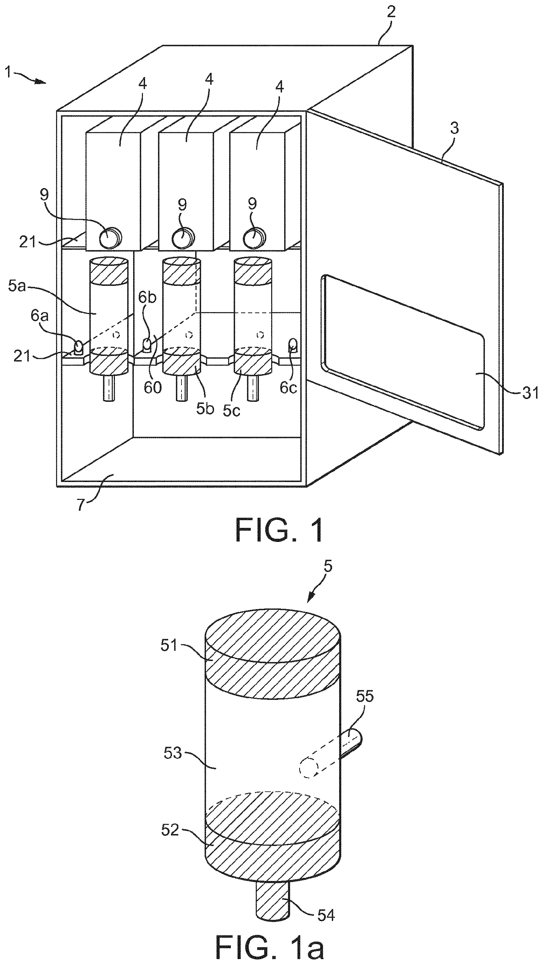

In the present application the terms "bottom", "top", "lateral", "middle", "front", "back" and "external" are used to describe the relational positioning of features of the invention. These terms should be understood to refer to the dispenser or its chamber(s) in their normal orientation for a beverage preparation as shown for example in Figures 1 to 7.

Further objects and advantageous features of the invention will be apparent from the claims, from the detailed description, and annexed drawings.

### Brief description of the drawings

The characteristics and advantages of the invention will be better understood in relation to the following figures, in which :
- Figure 1 illustrates a beverage dispenser according to the present invention, the front door being opened,
- Figure 1a illustrates a mixing chamber of the dispenser of Figure 1,
- Figure 2 illustrates the beverage dispenser of Figure 1 with the front door closed,
- Figure 3 is a schematic illustration of the steps of preparation of a beverage according to the present invention.
- Figures 4, 5, 6, 7 illustrate the front faces of different embodiments of the beverage dispenser according to the present invention,
- Figure 8a is a longitudinal cross sectional view of a mixing chamber used in a beverage dispenser according to the present invention along a plan C passing through the diluent inlet (plane C illustrated in Figure 8c),
- Figure 8b is a longitudinal cross sectional view of the mixing chamber along the plan A of Figure 8a
- Figure 8c is a transverse cross sectional view of the mixing chamber along the plan B of Figure 8a.

### Detailed description of the drawings

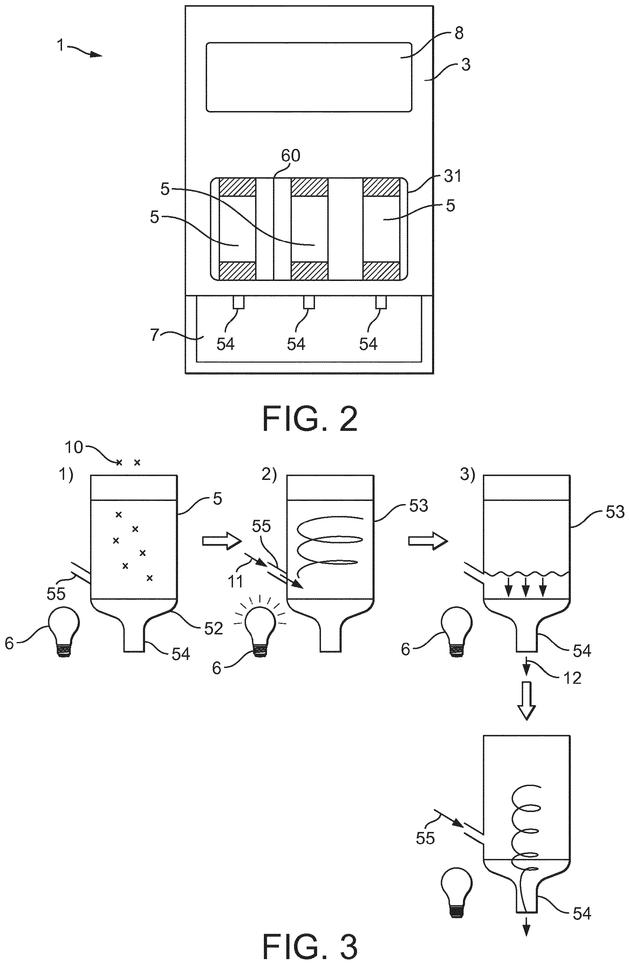

**Figure 1** illustrates a beverage dispenser according to the present invention. The beverage dispenser 1 comprises a housing 2 supporting the different functional devices of the dispenser. The housing can comprise shelves 21 for positioning and supporting these functional devices. The illustrated dispenser comprises three containers 4 for storing soluble beverage powders positioned on a first shelf 21.
Dispensers according to the invention can comprise more or less containers. The invention also relates to containers configured for storing soluble beverage concentrates. Such containers can be bag-in-box containers or bottles.
In the illustrated beverage dispenser a dosing device 9 is present in each of the container 4 in order to dose an amount of powder for the preparation of a beverage. According to an alternative embodiment the dosing device can be separated from the container.
Each of the containers 4 and their dosing devices 9 are positioned above a dedicated mixing chamber 5a, 5b, 5c in order to deliver a dose of beverage concentrate or powder by gravity fall.
**Figure 1a** is a magnified view of one of the mixing chambers 5a, 5b, 5c. The mixing chamber 5 presents a top part 51, a bottom part 42 and a middle part 53 in between. The middle part 53 of the mixing chamber is made of a transparent material. In Figure 1a the top and the bottom parts 51, 52 of the mixing chamber are not transparent. This effect can be obtained by positioning a non-transparent material above the transparent material the chamber is made of or by assembling the chamber with three components 51, 52, 53 in which only the element corresponding to the middle part 53 of the chamber is made of a transparent material.
The chamber comprises a diluent inlet 55 and a beverage outlet 54 in the bottom part 52. The top 51 of the chamber is opened in order to receive a dose of soluble beverage powder or concentrate from one container 4.
The beverage dispenser of Figure 1 comprises a dispensing area 7 in which a drinking cup can be positioned in order to be filled by a beverage dispensed from the outlet 5 of one of the mixing chamber.
The beverage dispenser of Figure 1 comprises a front door 3. The front door 3 aims to hide and protect at least a part of the internal functional devices of the dispenser. The front door comprises an opening 31. As illustrated in **Figure 2** showing the dispenser of Figure 1 with the front door 3 closed, the opening 31 is designed for making a part of the mixing chambers 5 visible from the outside of the dispenser. According to a particular embodiment the opening can be covered by a transparent window, for example for preventing customer from touching the internal parts of the dispenser.
The front door 3 comprises also a user interface 8 enabling a customer to order a beverage from the dispenser.
Figure 1 shows the presence of three lighting devices 6a, 6b, 6c inside the dispenser 1. Each lighting device 6a, 6b, 6c is dedicated to one chamber 5a, 5b, 5c and is positioned in order to illuminate the content of its dedicated chamber only. The lighting devices 6a, 6b, 6c are supported by a shelf 21 in the dispenser. In order to have the lighting device 6a illuminating the left chamber 5a only, said lighting device 6a is positioned at the left of the chamber 5a. Similarly the lighting device 6c is positioned at the right of the chamber 5c. As for the middle chamber 5b, in order to avoid that the lighting device 6b illuminates the left and right mixing chambers 5a, 5c, a physical barrier, for example a wall 60, is present between the lighting device 6b and the left mixing chamber 5a. It can be noticed that according to an alternative the physical barrier 60 used to control the illumination of a lighting device can be supported by the internal wall of the front door of the dispenser rather than by the shelf.
Preferably for each mixing chamber 5 the lighting device is not positioned at the back of the chamber or on a lateral backwards position relative to the chamber because, for the preparation of opaque beverages like milk, coffee or chocolate, lighting the mixing chamber from the back projects a shadow of the beverage through the opening 31 of the front door and does not make the content of the mixing chamber visible for the customer who is looking at the dispenser from the outside.

With the dispenser of Figures 1 and 2, the process of preparation of a beverage according to the invention is schematically illustrated in **Figure 3****.**
In a first step, a dose of soluble beverage powder or beverage concentrate 10 is introduced in the mixing chamber 5 while the lighting device 6 is switched off. The customer in front of the dispenser 1 can see the chamber through the opening 31 in the front door but due to the absence of light the content of the mixing chamber is not visible. The customer does not see powder or concentrate falling downstream to the bottom 52 of the mixing chamber 5.
In a second step, diluent 55 is introduced in the mixing chamber 5 through the diluent 55 and mixing occurs in the chamber. During at least a part of this mixing step the lighting device 6 is switched on so that content of the chamber is made visible for the customer through the opening 31 in the front door. The customer can see the beverage swirling in the mixing chamber. At this step of the preparation, the reconstituted beverage has the same aspect as the final beverage and the swirling effect provides a nice spectacle. For milk preparation, at this step of the process the reconstituted beverage looks like fresh milk. For espresso preparation, the whirlpool of reconstituted beverage presents two colors : the black colour of coffee at the bottom and the brown colour of coffee cream at the top. For chocolate preparation, the whirlpool of reconstituted beverage makes apparent the thickness of the brown reconstituted beverage.
In a third step, the reconstituted beverage 12 is dispensed from the mixing chamber outlet 54. During this step the level of the beverage decreases until the chamber is empty and traces of beverage or froth can deposit on the inward wall of the mixing chamber. The lighting device is preferably switched off during this step.
In a fourth step, the mixing chamber is rinsed by introducing diluent in the chamber. A swirl of water is created and the inward wall is cleaned. The lighting device is switched off during this step.

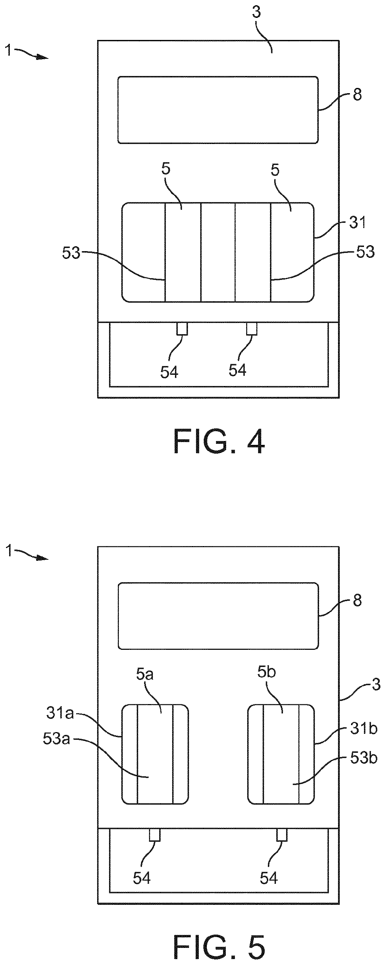

**Figure 4** illustrates the front door 3 of a beverage dispenser 1 according to the invention. The dispenser presents the same features as the dispenser of Figures 1 and 2 except that it comprises only two mixing chambers 5. Moreover the opening 31 in the front door is designed so that it makes only the middle parts 53 of the mixing chambers. Due to the fact that the tops and bottoms of the mixing chambers 5 are hidden behind the front door, there is more freedom concerning the design or the nature of the material of these parts that are never showed to the customer. For example, the mixing chambers can be completely transparent. That provides the advantage of enabling cleaning inspection for the operator. Yet, due to the opening design, the top and bottom of the chambers remain non visible for the customer.

**Figure 5** illustrates the front door 3 of a beverage dispenser 1 according to the invention. The dispenser presents the same features as the dispenser of Figure 4 except that the front door 3 comprises two openings 31a, 31b, each of said openings being centred on a dedicated mixing chamber 5a, 5b and being designed so that it makes only the middle parts 53a, 53b of the mixing chambers visible.

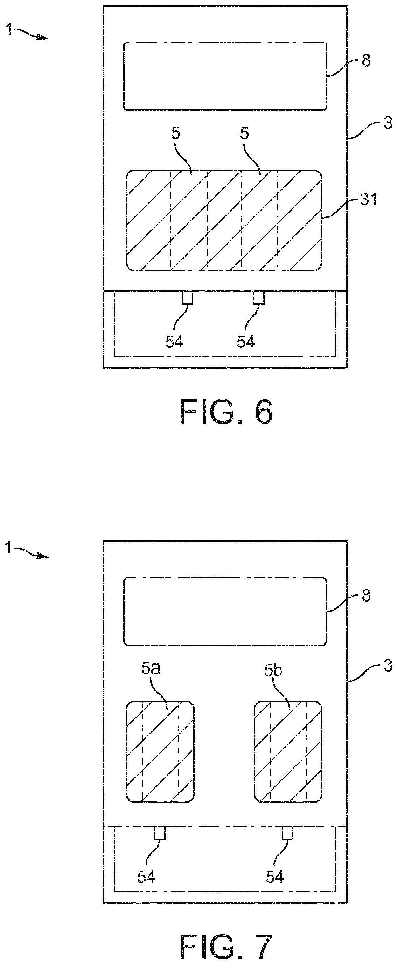

**Figure 6** illustrates the front door 3 of a beverage dispenser 1 according to the invention. The dispenser presents the same features as the dispenser of Figure 4 except that the window is closed by a non-permanent transparent window. This window can be a one-way mirror which becomes transparent when it is illuminated from the inside of the dispenser housing.
This window can be a polarised glass which becomes transparent when powered on. In such an embodiment the lighting device and the polarised glass are switched on simultaneously during the mixing step of the process of preparation of a beverage.

**Figure 7** illustrates the front door 3 of a beverage dispenser 1 according to the invention. The dispenser presents the same features as the dispenser of Figure 6 except that the front door 3 comprises two openings 31a, 31b, each of said openings being centred on a dedicated mixing chamber 5a, 5b.

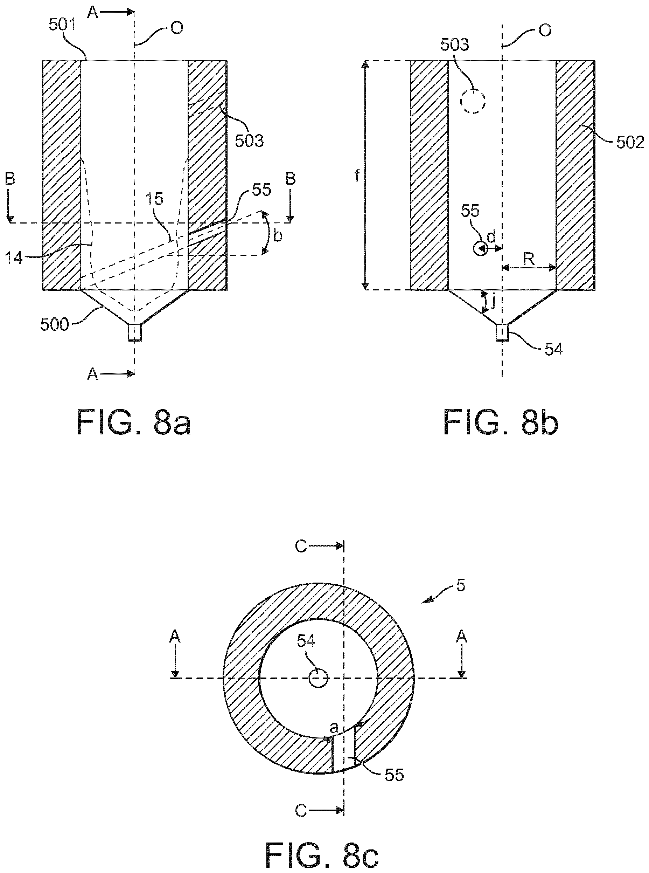

Referring to **Figures 8a to 8c**, the preferred mixing chamber used in a dispenser according to the present invention is shown in greater detail. The chamber is preferably cylindrical. The chamber 5 is demarcated by a bottom wall 500 and a longitudinal upward wall 502, said side wall extending upwardly and surrounding an upper central opening 501. The central opening 501 allows the chamber to be fed with soluble beverage powder or concentrate. In order for the ingredient to fall directly in the chamber, the surface of the upward wall 502 is preferably smooth and relatively vertical although a slight inclination relative to vertical is conceivable. The central opening 501 also serves as an air inlet for allowing air to enter the chamber and mix with the beverage being created.
Diluent is fed at relatively high velocity into the chamber by the diluent inlet 55 through the upward wall 502. The inlet is sized and oriented in a manner to promote both centrifugal circulation of the liquid and shearing on the surfaces of the liquid.
Preferably, the diluent inlet 55 forms a nozzle of small diameter enabling to create a diluent jet 15 with high linear velocity in the chamber.
Preferably the diluent inlet 55 is so oriented in a direction that is offset relative to the longitudinal median axis O of the chamber. More precisely, the direction of the inlet is such that the ratio d/r is comprised between 0,2 and 0,9, where "d" is the orthogonal distance separating the centre of the inlet from the longitudinal median axis O of the chamber and "r" is the radius of the chamber at the horizontal level of the inlet (Figure 8b).
Preferably the diluent inlet 55 is also positioned preferably at a relatively low position relative to the longitudinal dimension "f' of the upward wall 502 so that splashing of liquid or overflow of liquid out of the chamber due the liquid rising up along the surface of wall by the dynamic of the flow, i.e., a centrifugal effect, is prevented. Preferably, the diluent inlet is situated at a distance closer to the base of the bottom wall than to the aperture 501. More preferably, the inlet is situated at about or within in the lower quarter of the chamber (as measured by the height "f" of the upward wall 502).
Preferably the diluent inlet 55 is inclined downwardly a certain angle b relative to the transversal plane of the chamber. Preferably, this angle is of from 5 to 30 degrees.
Therefore, the diluent inlet can be properly oriented toward the surfaces of liquid that circulates in the chamber. The transversal plane of the chamber is normally orthogonal to the longitudinal direction of the chamber which is thus preferably positioned vertically to obtain a good liquid evacuation of the chamber under the effect of gravity.
The shape of the bottom wall 500 can be conical so that spreading of the layer of liquid is promoted. The angle "j" of the cone of the bottom wall, relative to a plane transversal to the longitudinal median axis O, can vary of from 1 to 45 degrees. The bottom wall can be rounded or flat as well.

Preferably the bottom wall 500 of the chamber comprises means for controlling the delivered flow of the frothed liquid through the device. The general principle lies in that liquid is prevented from too quickly leaving the chamber in order to be able to create a layer of liquid that rises up along the side of the upward wall 502 that can be impacted by the jet of diluent and consequently for creating a high amount of shear. Figure 8a materializes, for example, the surface 4 of the liquid in circulation due to the centrifugal effect promoted by the jet on the liquid in the chamber.
The flow control means are therefore obtained by a control of the size and configuration of the delivery outlet(s) or by using a valve at the outlet of the chamber to close the outlet during the beverage preparation. The valve can be a pinch valve.
The chamber can comprise a secondary diluent inlet 503 placed above the main diluent inlet 55. Preferably the secondary diluent inlet 503 is close to the top. Diluent introduced through said inlet is usually used to rinse the chamber after a beverage preparation or to prepare big sized beverages.
The use of the efficient dissolving chamber devoid of whipper provides the customer with the nice spectacle of a gentle and soft dissolution increasing the perception of the quality of the beverage.
Although the invention has been described with reference to the above illustrated embodiments, it will be appreciated that the invention as claimed is not limited in any way by these illustrated embodiments.
Variations and modifications may be made without departing from the scope of the invention as defined in the claims.

### List of references in the drawings :

- 1: beverage dispenser
- 2: housing
- 21: shelf
- 3: front door
- 31: opening
- 4: container
- 5, 5a, 5b, 5c: mixing chamber
- 51: mixing chamber top
- 52: mixing chamber bottom
- 53: mixing chamber middle
- 54: beverage outlet
- 55: diluent inlet
- 500: bottom wall
- 501: upper central opening
- 502: longitudinal upward wall
- 503: secondary diluent inlet
- 6, 6a, 6b, 6c: lighting device
- 60: barrier
- 7: dispensing area
- 8: user interface
- 9: dosing device
- 10: soluble beverage powder or concentrate
- 11: diluent
- 12: beverage
- 13: diluent jet
- 14: liquid surface
- 15: diluent jet

## Claims

1. Process for preparing a beverage by dissolution of soluble beverage powder or of beverage concentrate with a diluent, the process being implemented in a beverage dispenser (1),
said beverage dispenser comprising :
- at least one mixing chamber (5, 5a, 5b, 5c) for mixing a dose of soluble beverage powder or of beverage concentrate with diluent, said mixing chamber being at least partially transparent,
and the process comprising the steps of :
- introducing a dose of soluble beverage powder or beverage concentrate in the mixing chamber,
- mixing the dosed soluble beverage powder or beverage concentrate with diluent in the mixing chamber,
- dispensing the beverage from the mixing chamber,
- rinsing the mixing chamber,
wherein, in said process, the content of the mixing chamber is made visible from the outside of the dispenser during the step of mixing only.

2. Process according to Claim 1 wherein the mixing chamber (5, 5a, 5b, 5c) of the beverage dispenser is a whipperless chamber.

3. Process according to Claim 1 or 2 wherein the mixing chamber (5, 5a, 5b, 5c) comprises at least one diluent inlet (55) configured for introducing the diluent in the form of a jet inside the chamber and the chamber is configured so that a whirlpool of liquid is created in the chamber and the jet of diluent entering the chamber hits said whirlpool as long as diluent is introduced in the chamber.

4. Process according to any one of the precedent claims wherein at least the middle part (53) of the chamber is transparent.

5. Process according to any one of the precedent claims wherein the dispenser comprises at least one lighting device (6, 6a, 6b, 6c) and, in the process for preparing a beverage, the content of the mixing chamber is made visible from the outside of the dispenser by switching on the lighting device during the step of mixing only.

6. Process according to the precedent claim, wherein the at least one lighting device (6, 6a, 6b, 6c) is positioned in an area of the dispenser, said area being on one lateral side of the mixing chamber or between the front of the dispenser and the mixing chamber.

7. Process according Claim 5 or 6, wherein the dispenser comprises several mixing chambers (5a, 5b, 5c) and one lighting device (6a, 6b, 6c) is dedicated to each mixing chamber.

8. Process according to any one of the precedent claims, wherein the dispenser comprises a front panel (3), said front panel comprising an area (31) through which the at least one mixing chamber is visible from the outside of the dispenser, preferably the middle of the chamber is visible.

9. Process according to any one of the precedent claims wherein :
- the at least one mixing chamber (5, 5a, 5b, 5c) is always visible from the outside of the dispenser,
- the dispenser comprises a lighting device (6, 6a, 6b, 6c),
- the content of the mixing chamber is made visible by switching on the lighting device during the step of mixing only.

10. Process according to any one Claims 1 to 7 wherein :
- the at least one mixing chamber is positioned behind a front panel (3),
- at least the part of the front panel positioned in front of the mixing chamber is transparent during the step of mixing only, preferably in front of the middle of the chamber.

11. Process according to the precedent claim wherein at least the part of the front panel positioned in front of the mixing chamber is a one-way mirror and the dispenser comprises at least one lighting device (6, 6a, 6b, 6c) for illuminating the at least one mixing chamber and the one-way mirror, the lighting device being switched on during the step of mixing only.

12. Process according to Claim 10 wherein at least a part of the front panel is a polarised glass facing the middle of the mixing chamber.

13. Beverage dispenser (1) comprising :
- at least one beverage powder or concentrate container (4),
- at least one whipperless mixing chamber (5, 5a, 5b, 5c) for mixing a dose of soluble beverage powder or of beverage concentrate with diluent,
wherein
- said mixing chamber is at least partially transparent, and
- said mixing chamber (5, 5a, 5b, 5c) comprises at least one diluent inlet (55) configured for introducing the diluent in the form of a jet inside the chamber and the chamber is configured so that a whirlpool of liquid is created in the chamber and the jet of diluent entering the chamber hits said whirlpool as long as diluent is introduced in the chamber,
- the dispenser comprising at least one lighting device (6, 6a, 6b, 6c) for illuminating the content of at least one mixing chamber, and
- the dispenser is configured for making the content of said chamber visible from the outside of the dispenser only temporarily.

14. Beverage dispenser according to the precedent claim, wherein the at least one mixing chamber is a chamber having a transverse bottom wall (500) and a longitudinal upward wall (502), at least one diluent inlet (55) and at least one beverage outlet (54) located in the bottom wall,
- the diluent inlet (55) being provided through a lower portion of the upward wall and being dimensioned and oriented for providing a jet of diluent in the chamber oriented along a direction inside the chamber which is offset relative to the longitudinal median axis (O) of the chamber, and which is inclined downwardly in direction toward the bottom wall at an angle relative to the transversal plane of the chamber,
- the liquid delivery outlet being configured for enabling liquid to rise up along the side of the upward wall further to the jet of diluent entering the chamber.

15. Beverage dispenser according to the precedent claim, wherein the mixing chamber comprises a valve configured for selectively closing the liquid delivery outlet.

## Patentansprüche

1. Verfahren zum Zubereiten eines Getränks durch Auflösung von löslichem Getränkepulver oder von Getränkekonzentrat mit einem Verdünnungsmittel, wobei das Verfahren in einem Getränkespender (1) umgesetzt wird,
wobei der Getränkespender umfasst:
- mindestens eine Mischkammer (5, 5a, 5b, 5c) zum Mischen einer Dosis von löslichem Getränkepulver oder von Getränkekonzentrat mit Verdünnungsmittel, wobei die Mischkammer mindestens teilweise transparent ist,
und wobei das Verfahren die folgenden Schritte umfasst:
- Einbringen einer Dosis von löslichem Getränkepulver oder Getränkekonzentrat in die Mischkammer,
- Mischen des dosierten löslichen Getränkepulvers oder Getränkekonzentrats mit Verdünnungsmittel in der Mischkammer,
- Abgeben des Getränks aus der Mischkammer,
- Spülen der Mischkammer,
wobei in dem Verfahren der Inhalt der Mischkammer nur während des Schritts des Mischens von außerhalb des Spenders sichtbar gemacht wird.

2. Verfahren nach Anspruch 1, wobei die Mischkammer (5, 5a, 5b, 5c) des Getränkespenders eine schlägerlose Kammer ist.

3. Verfahren nach Anspruch 1 oder 2, wobei die Mischkammer (5, 5a, 5b, 5c) mindestens einen Verdünnungsmitteleinlass (55) umfasst, der zum Einbringen des Verdünnungsmittels in Form eines Strahls ins Innere der Kammer konfiguriert ist, und die Kammer so konfiguriert ist, dass ein Wirbel von Flüssigkeit in der Kammer erzeugt wird, und der Strahl des Verdünnungsmittels, der in die Kammer eintritt, auf den Wirbel trifft, solange Verdünnungsmittel in die Kammer eingebracht wird.

4. Verfahren nach einem der vorstehenden Ansprüche, wobei mindestens der mittlere Teil (53) der Kammer transparent ist.

5. Verfahren nach einem der vorstehenden Ansprüche, wobei der Spender mindestens eine Beleuchtungseinrichtung (6, 6a, 6b, 6c) umfasst und in dem Verfahren zum Zubereiten eines Getränks der Inhalt der Mischkammer nur während des Schritts des Mischens durch Einschalten der Beleuchtungseinrichtung von außerhalb des Spenders sichtbar gemacht wird.

6. Verfahren nach dem vorstehenden Anspruch, wobei die wenigstens eine Beleuchtungseinrichtung (6, 6a, 6b, 6c) in einem Bereich des Spenders angeordnet ist, wobei der Bereich auf einer lateralen Seite der Mischkammer oder zwischen der Vorderseite des Spenders und der Mischkammer liegt.

7. Verfahren nach Anspruch 5 oder 6, wobei der Spender mehrere Mischkammern (5a, 5b, 5c) umfasst und eine Beleuchtungseinrichtung (6a, 6b, 6c) für jede Mischkammer vorgesehen ist.

8. Verfahren nach einem der vorstehenden Ansprüche, wobei der Spender eine Frontblende (3) umfasst, wobei die Frontblende einen Bereich (31) umfasst, durch den die mindestens eine Mischkammer von außerhalb des Spenders sichtbar ist, wobei vorzugsweise die Mitte der Kammer sichtbar ist.

9. Verfahren nach einem der vorstehenden Ansprüche, wobei:
- die mindestens eine Mischkammer (5, 5a, 5b, 5c) stets von außerhalb des Spenders sichtbar ist,
- der Spender eine Beleuchtungseinrichtung (6, 6a, 6b, 6c) umfasst,
- der Inhalt der Mischkammer nur während des Schritts des Mischens durch Einschalten der Beleuchtungseinrichtung sichtbar gemacht wird.

10. Verfahren nach einem der Ansprüche 1 bis 7, wobei:
- die mindestens eine Mischkammer hinter einer Frontblende (3) angeordnet ist,
- mindestens der Teil der Frontblende vor der Mischkammer nur während des Schritts des Mischens transparent ist, vorzugsweise vor der Mitte der Kammer.

11. Verfahren nach dem vorstehenden Anspruch, wobei mindestens der Teil der Frontblende vor der Mischkammer ein Einwegspiegel ist und der Spender mindestens eine Beleuchtungseinrichtung (6, 6a, 6b, 6c) zur Beleuchtung der mindestens einen Mischkammer und des Einwegspiegels umfasst, wobei die Beleuchtungseinrichtung nur während des Schritts des Mischens eingeschaltet wird.

12. Verfahren nach Anspruch 10, wobei mindestens ein Teil der Frontblende ein polarisiertes Glas ist, das der Mitte der Mischkammer zugewandt ist.

13. Getränkespender (1), umfassend:
- mindestens einen Getränkepulver- oder Getränkekonzentratbehälter (4),
- mindestens eine schlägerlose Mischkammer (5, 5a, 5b, 5c) zum Mischen einer Dosis von löslichem Getränkepulver oder Getränkekonzentrat mit Verdünnungsmittel,
wobei
- die Mischkammer mindestens teilweise transparent ist und
- die Mischkammer (5, 5a, 5b, 5c) mindestens einen Verdünnungsmitteleinlass (55) umfasst, der zum Einbringen des Verdünnungsmittels in Form eines Strahls ins Innere der Kammer konfiguriert ist, und die Kammer so konfiguriert ist, dass ein Wirbel von Flüssigkeit in der Kammer erzeugt wird und der Strahl des Verdünnungsmittels, der in die Kammer eintritt, auf den Wirbel trifft, solange Verdünnungsmittel in die Kammer eingebracht wird,
- der Spender mindestens eine Beleuchtungseinrichtung (6, 6a, 6b, 6c) zum Beleuchten des Inhalts von mindestens einer Mischkammer umfasst, und
- der Spender dazu konfiguriert ist, den Inhalt der Kammer nur vorübergehend von außen sichtbar zu machen.

14. Getränkespender nach dem vorstehenden Anspruch, wobei die mindestens eine Mischkammer eine Kammer mit einer quer verlaufenden unteren Wand (500) und einer längs nach oben verlaufenden Wand (502) ist, wobei mindestens ein Verdünnungsmitteleinlass (55) und mindestens ein Getränkeauslass (54) in der unteren Wand angeordnet sind,
- wobei der Verdünnungsmitteleinlass (55) durch einen unteren Abschnitt der nach oben verlaufenden Wand vorgesehen ist und dazu dimensioniert und ausgerichtet ist, einen Strahl des Verdünnungsmittels in der Kammer bereitzustellen, der an einer Richtung innerhalb der Kammer ausgerichtet ist, die zu der Längsmittelachse (O) der Kammer versetzt ist, und die in einer Richtung hin zur unteren Wand in einem Winkel relativ zur Querebene der Kammer nach unten geneigt ist,
- wobei der Flüssigkeitsabgabeauslass dazu konfiguriert ist, es einer Flüssigkeit zu ermöglichen, entlang der Seite der nach oben verlaufenden Wand weiter zu dem Strahl des Verdünnungsmittels aufzusteigen, der in die Kammer eintritt.

15. Getränkespender nach dem vorstehenden Anspruch, wobei die Mischkammer ein Ventil umfasst, das dazu konfiguriert ist, den Flüssigkeitsabgabeauslass selektiv zu schließen.

## Revendications

1. Procédé de préparation d'une boisson par dissolution d'une boisson en poudre soluble ou d'un concentré de boisson avec un diluant, le procédé étant mis en oeuvre dans un distributeur de boissons (1),
ledit distributeur de boissons comprenant :
- au moins une chambre de mélange (5, 5a, 5b, 5c) pour mélanger une dose de boisson en poudre soluble ou de concentré de boisson avec un diluant, ladite chambre de mélange étant au moins partiellement transparente,
et le procédé comprenant les étapes consistant à :
- introduire une dose de boisson en poudre soluble ou de concentré de boisson dans la chambre de mélange,
- mélanger la boisson en poudre soluble ou le concentré de boisson dosé(e) avec un diluant dans la chambre de mélange,
- distribuer la boisson à partir de la chambre de mélange,
- rincer la chambre de mélange,
dans lequel, dans ledit procédé, le contenu de la chambre de mélange est rendu visible depuis l'extérieur du distributeur pendant l'étape de mélange uniquement.

2. Procédé selon la revendication 1, dans lequel la chambre de mélange (5, 5a, 5b, 5c) du distributeur de boissons est une chambre sans fouet.

3. Procédé selon la revendication 1 ou 2, dans lequel la chambre de mélange (5, 5a, 5b, 5c) comprend au moins une entrée de diluant (55) configurée pour introduire le diluant sous la forme d'un jet à l'intérieur de la chambre et la chambre est configurée de sorte qu'un tourbillon de liquide soit créé dans la chambre et le jet de diluant pénétrant dans la chambre frappe ledit tourbillon tant que le diluant est introduit dans la chambre.

4. Procédé selon l'une quelconque des revendications précédentes, dans lequel au moins la partie centrale (53) de la chambre est transparente.

5. Procédé selon l'une quelconque des revendications précédentes, dans lequel le distributeur comprend au moins un dispositif d'éclairage (6, 6a, 6b, 6c) et, dans le procédé de préparation d'une boisson, le contenu de la chambre de mélange est rendu visible depuis l'extérieur du distributeur par activation du dispositif d'éclairage pendant l'étape de mélange uniquement.

6. Procédé selon la revendication précédente, dans lequel ledit au moins un dispositif d'éclairage (6, 6a, 6b, 6c) est positionné dans une zone du distributeur, ladite zone étant sur un côté latéral de la chambre de mélange ou entre l'avant du distributeur et la chambre de mélange.

7. Procédé selon la revendication 5 ou 6, dans lequel le distributeur comprend plusieurs chambres de mélange (5a, 5b, 5c) et un dispositif d'éclairage (6a, 6b, 6c) est dédié à chaque chambre de mélange.

8. Procédé selon l'une quelconque des revendications précédentes, dans lequel le distributeur comprend un panneau avant (3), ledit panneau avant comprenant une zone (31) à travers laquelle ladite au moins une chambre de mélange est visible depuis l'extérieur du distributeur, de préférence le milieu de la chambre est visible.

9. Procédé selon l'une quelconque des revendications précédentes, dans lequel :
- ladite au moins une chambre de mélange (5, 5a, 5b, 5c) est toujours visible depuis l'extérieur du distributeur,
- le distributeur comprend un dispositif d'éclairage (6, 6a, 6b, 6c),
- le contenu de la chambre de mélange est rendu visible par activation du dispositif d'éclairage pendant l'étape de mélange uniquement.

10. Procédé selon l'une quelconque des revendications 1 à 7, dans lequel :
- ladite au moins une chambre de mélange est positionnée derrière un panneau avant (3),
- au moins la partie du panneau avant positionnée devant la chambre de mélange est transparente pendant l'étape de mélange uniquement, de préférence devant le milieu de la chambre.

11. Procédé selon la revendication précédente, dans lequel au moins la partie du panneau avant positionnée devant la chambre de mélange est un miroir sans tain et le distributeur comprend au moins un dispositif d'éclairage (6, 6a, 6b, 6c) pour éclairer ladite au moins une chambre de mélange et le miroir sans tain, le dispositif d'éclairage étant activé pendant l'étape de mélange uniquement.

12. Procédé selon la revendication 10, dans lequel au moins une partie du panneau avant est un verre polarisé faisant face au milieu de la chambre de mélange.

13. Distributeur de boissons (1) comprenant :
- au moins un récipient à poudre ou concentré de boisson (4),
- au moins une chambre de mélange sans fouet (5, 5a, 5b, 5c) pour mélanger une dose de boisson en poudre soluble ou de concentré de boisson avec un diluant,
dans lequel
- ladite chambre de mélange est au moins partiellement transparente et
- ladite chambre de mélange (5, 5a, 5b, 5c) comprend au moins une entrée de diluant (55) configurée pour introduire le diluant sous la forme d'un jet à l'intérieur de la chambre et la chambre est configurée de sorte qu'un tourbillon de liquide soit créé dans la chambre et le jet de diluant pénétrant dans la chambre frappe ledit tourbillon tant que le diluant est introduit dans la chambre,
- le distributeur comprenant au moins un dispositif d'éclairage (6, 6a, 6b, 6c) pour éclairer le contenu d'au moins une chambre de mélange et
- le distributeur est configuré pour rendre le contenu de ladite chambre visible depuis l'extérieur du distributeur de façon seulement temporaire.

14. Distributeur de boissons selon la revendication précédente, dans lequel ladite au moins une chambre de mélange est une chambre ayant une paroi inférieure transversale (500) et une paroi montante longitudinale (502), au moins une entrée de diluant (55) et au moins une sortie de boisson (54) située dans la paroi inférieure,
- l'entrée de diluant (55) étant fournie à travers une partie inférieure de la paroi montante et étant dimensionnée et orientée pour fournir un jet de diluant dans la chambre, orienté le long d'une direction à l'intérieur de la chambre qui est décalée par rapport à l'axe médian longitudinal (O) de la chambre et qui est inclinée vers le bas dans une direction allant vers la paroi inférieure selon un angle par rapport au plan transversal de la chambre,
- la sortie de distribution de liquide étant configurée pour permettre au liquide de monter le long du côté de la paroi montante davantage vers le jet de diluant pénétrant dans la chambre.

15. Distributeur de boissons selon la revendication précédente, dans lequel la chambre de mélange comprend une vanne configurée pour fermer sélectivement la sortie de distribution de liquide.
